# FASCICULE DE BREVET EUROPEEN

(11) **EP 1 304 588 B1**
(45) Date de publication et mention de la délivrance du brevet: **24.02.2010**
(21) Numéro de dépôt: 02292549.9
(22) Date de dépôt: 16.10.2002
(51) Int. Cl.: G02B 6/36, G02B 6/38, G02B 6/42

(54) **Procédé et dispositif de connexion/déconnexion de fibre optique avec un composant optoélectronique**
Ein-Ausschaltvorrichtung für optische Faser mit optoelektronischem Bauelement
Optical fiber connecting/disconnecting method and device with opto-electronic component

(30) Priorité: 18.10.2001 FR 0113434
(43) Date de publication de la demande: 23.04.2003
(73) Titulaire: COMMISSARIAT A L'ENERGIE ATOMIQUE, 75015 Paris (FR)
(72) Inventeur: Marion, François, 38120 Saint-Egreve (FR)
(74) Mandataire: Audier, Philippe André

(56) Documents cités:
- EP-A- 0 335 367
- US-A- 4 232 934

## Description

### Domaine technique et art antérieur

La présente invention concerne un procédé et un dispositif de connexion/déconnexion de fibre optique avec un composant optoélectronique.

La procédé selon l'invention permet d'aligner au moins une fibre optique et au moins un composant optoélectronique en vue d'un assemblage de précision. Cet assemblage peut être temporaire.

Le composant optoélectronique peut être un photoémetteur, un photodétecteur, une autre fibre, un réseau de guides d'onde et, plus généralement, tout circuit optique ou électrique pouvant être relié à une fibre optique.

Différentes techniques sont connues de l'art antérieur pour aligner et assembler une fibre optique avec un composant optoélectronique. Les techniques les plus communément employées se divisent en deux groupes distincts : les techniques dites « actives » et les techniques dites « passives ».

Dans une technique « active », l'alignement de la fibre optique et du composant optoélectronique s'effectue en deux temps. Dans un premier temps, la fibre optique et le composant optoélectronique sont grossièrement alignés ensemble. Dans un deuxième temps, la fibre optique et le composant optoélectronique sont alimentés pour assurer leur fonctionnement (alimentation optique et/ou électrique). L'alignement précis entre la fibre et le composant est alors réalisé en optimisant les mesures optiques et/ou électriques. Une fois la position optimale trouvée, la fibre et le composant sont fixés l'un à l'autre par collage, soudure, ou tout autre moyen connu de maintien mécanique. On peut ainsi, par exemple, aligner une fibre optique et un laser en mesurant la lumière issue du laser qui est couplée dans la fibre.

Dans une technique « passive », les composants à aligner comprennent des moyens d'auto-alignement. C'est le cas, par exemple, avec la méthode d'auto-alignement par billes de soudure communément appelée méthode « flip-chip ».

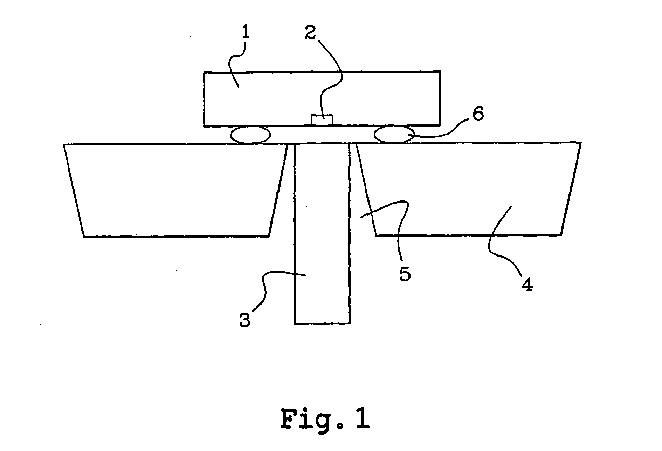

La figure 1 représente un schéma de principe de dispositif d'auto-alignement selon l'art antérieur décrit dans le document intitulé «*Through-etched silicon carriers for passive alignment of optical fibers to surface-active optoelectronic components*» (Sensors and Actuators 82 (2000); 245-248).

Le dispositif de la figure 1 comprend un composant optoélectronique 1 muni d'un port d'accès 2, une fibre optique 3 à aligner avec le port d'accès 2, une plaque 4 percée d'un trou conique 5 et des billes de soudure 6.

L'alignement entre la fibre 3 et le port d'accès 2 est réalisé par insertion de la fibre dans le trou conique 5. La forme conique du trou permet de faciliter l'alignement entre la fibre et le port d'accès.

Plusieurs inconvénients sont cependant liés à cette technique. Tout d'abord, rendre le trou conique est relativement difficile et fait perdre sur la précision d'alignement : en effet, plus la conicité est grande, moins la précision est bonne. Par ailleurs, après insertion de la fibre dans le trou, aucune force ne retient la fibre. La fibre doit alors être fixée par collage et maintenue mécaniquement pendant ce collage.

L'invention ne présente pas les inconvénients mentionnés ci-dessus.

### Exposé de l'invention

En effet, l'invention concerne un dispositif de connexion d'au moins une fibre optique avec un composant optoélectronique. Le dispositif comprend au moins un logement pourvu d'au moins un bras mobile, le logement comprenant :
- une première zone pour introduire la fibre dans le logement en l'absence de pression exercée sur le bras mobile, la première zone étant délimitée par une partie de paroi du logement et par le bras mobile, et
- une deuxième zone pour fixer la fibre dans le logement suite à une pression exercée par la fibre sur le bras mobile.

L'invention concerne également un procédé de connexion d'au moins une fibre optique avec un composant optoélectronique. Le procédé comprend les étapes successives suivantes :
- introduction de la fibre dans une première zone d'un logement pourvu d'au moins un bras mobile, l'introduction de la fibre étant effectuée en l'absence de pression exercée sur le ou les bras mobile(s),
- déplacement de la fibre vers une extrémité du ou des bras mobile(s),
- pression de la fibre optique sur l'extrémité du ou des bras mobile(s) de façon que le ou les bras mobile(s) finisse(nt) par s'immobiliser dans une position de rétention de la fibre dans une deuxième zone (Z2) du logement.

L'invention concerne encore une structure de fixation d'un connecteur muni de fibres optiques à un composant optoélectronique, le connecteur comprenant au moins un pion de guidage. La structure comprend au moins un logement pourvu d'au moins un bras mobile, le logement comprenant :
- une première zone pour introduire le pion de guidage dans le logement en l'absence de pression exercée sur le bras mobile, la première zone étant délimitée par une partie de paroi du logement et par le bras mobile, et
- une deuxième zone pour fixer le pion de guidage dans le logement suite à une pression exercée par le pion de guidage sur le bras mobile.

L'invention concerne encore un procédé de fixation de connecteur muni de fibres optiques à un composant microélectronique, le connecteur comprenant au moins un pion de guidage. Le procédé comprend les étapes successives suivantes :
- introduction du pion de guidage dans une première zone d'un logement pourvu d'au moins un bras mobile, l'introduction du pion de guidage étant effectuée en l'absence de pression exercée sur le ou les bras mobile(s),
- déplacement du pion de guidage vers une extrémité du ou des bras mobile(s),
- pression du pion de guidage sur l'extrémité du ou des bras mobile(s) de façon que le ou les bras mobile(s) finisse(nt) par s'immobiliser dans une position de rétention du pion de guidage dans une deuxième zone (Z2) du logement.

### Brève description des figures

D'autres caractéristiques et avantages de l'invention apparaîtront à la lecture de modes de réalisation préférentiels de l'invention faits en référence aux figures jointes parmi lesquelles :
- la figure 1 représente un dispositif de connexion de fibre optique avec un composant optoélectronique selon l'art antérieur,
- les figures 2A et 2B représentent, respectivement, une vue de dessus et une vue en coupe d'un dispositif de connexion de fibre optique avec un composant optoélectronique selon un premier mode de réalisation de l'invention,
- les figures 3A et 3B représentent, respectivement, une vue de dessus et une vue en coupe d'un dispositif de connexion d'un ruban de fibres optiques avec un dispositif optoélectronique,
- les figures 4A et 4B représentent, respectivement, une vue de dessus et une vue en coupe d'une structure de connexion entre un connecteur optique muni de pions de guidage et un dispositif optoélectronique,
- la figure 5 représente un dispositif de connexion de fibre optique avec un composant optoélectronique selon un deuxième mode de réalisation de l'invention,
- la figure 6 représente un dispositif de connexion de fibre optique avec un composant optoélectronique selon un troisième mode de réalisation de l'invention,
- la figure 7 représente un dispositif de connexion de fibre optique avec un composant optoélectronique selon un quatrième mode de réalisation de l'invention.

Sur toutes les figures les mêmes repères désignent les mêmes éléments.

### Description détaillée de modes de mise en oeuvre de l'invention

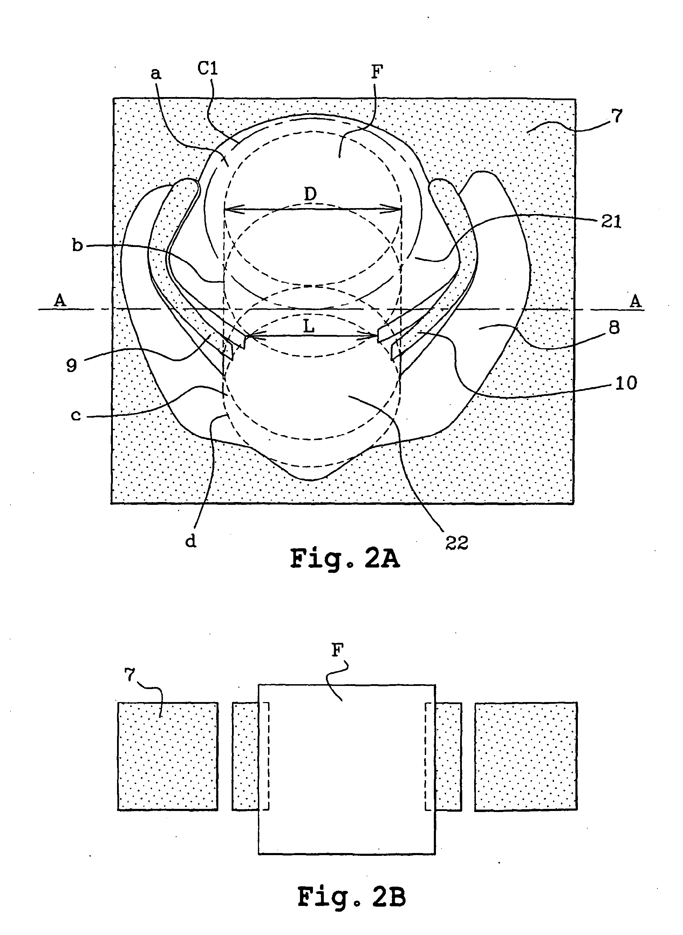

La figure 2A représente une vue de dessus d'un dispositif de connexion de fibre optique avec un composant optoélectronique selon un premier mode de réalisation de l'invention. La figure 2B représente une vue selon la coupe A-A de la figure 2A.

Le dispositif de connexion est constitué d'une pièce mécanique 7, par exemple en silicium, dans laquelle est prévu un logement 8. Le logement 8 comprend deux bras mobiles 9 et 10, par exemple de type ressort micromécanique en silicium. Les bras mobiles 9 et 10 permettent de définir deux zones Z1, Z2 dans le logement 8. Une première zone Z1 est délimitée par une partie de paroi du logement 8 et par les bras mobiles 9 et 10 sur lesquels ne s'exerce aucune pression. La zone Z1 est la zone dans laquelle la fibre est introduite dans le logement 8. Une deuxième zone Z2 est définie comme la zone du logement 8 dans laquelle la fibre est immobilisée dans une position de rétention à la suite de la pression exercée, par la fibre, sur les extrémités des bras mobiles. Lorsque les bras mobiles 9 et 10 ne sont soumis à aucune pression, la distance L qui sépare leurs extrémités est inférieure au diamètre D de la fibre.

Le procédé de fixation d'une fibre dans le dispositif de connexion comprend les étapes suivantes :
- introduction de la fibre dans la première zone Z1 en l'absence de pression exercée sur le bras mobile (position a sur la figure 2A),
- déplacement de la fibre optique vers les extrémités des bras mobiles 9 et 10 de façon à mettre en contact la fibre avec ces extrémités (position b sur la figure 2A),
- pression de la fibre sur les extrémités des bras 9 et 10 de façon à écarter les bras l'un de l'autre (position c sur la figure 2A),
- continuation de la pression exercée par la fibre sur les extrémités des bras 9 et 10 de façon que les bras mobiles finissent par s'immobiliser dans une position de rétention de la fibre.

A titre d'exemple non limitatif, la première zone Z1 dans laquelle la fibre F est introduite est au minimum une zone dont le contour C1 est de diamètre 140µm pour une fibre optique de diamètre 125µm.

Il est clair que la fibre peut être retirée par un mouvement opposé au mouvement décrit ci-dessus, puis à nouveau réinsérée, et cela autant de fois qu'il est nécessaire. Dans le cas où il n'est pas nécessaire de retirer la fibre une fois celle-ci introduite, l'ensemble peut être solidifié, par exemple avec de la colle époxy réticulable UV.

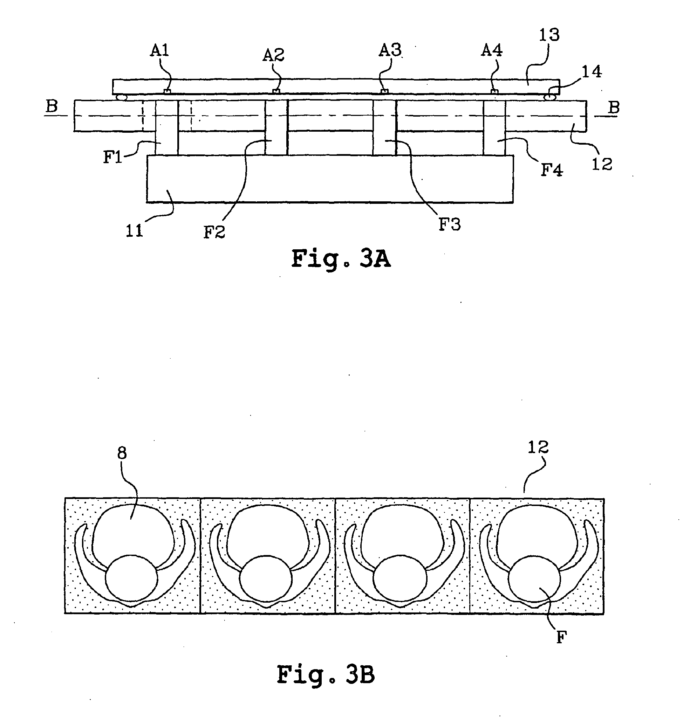

La figure 3A représente une vue de dessus d'un dispositif de connexion d'un ruban de fibres optiques avec un dispositif optoélectronique. La figure 3B représente une vue selon la coupe B-B de la figure 3A.

Quatre fibres optiques F1, F2, F3, F4 montées sur un ruban 11 sont connectées aux ports d'accès respectifs A1, A2, A3, A4 d'un dispositif optoélectronique 13. Un dispositif de connexion 12 comprend quatre dispositifs de connexion élémentaires tels que celui représenté aux figures 2A et 2B. Chaque dispositif de connexion élémentaire permet d'aligner une fibre optique avec un port d'accès (cf. figure 3B). Des billes de soudure 14 permettent de fixer le dispositif de connexion 12 au dispositif optoélectronique 13.

Préférentiellement, le dispositif de connexion 12 est constitué d'une plaque de silicium et les logements 8 sont réalisés collectivement par gravure dans la plaque de silicium (plasma, chimique, etc.).

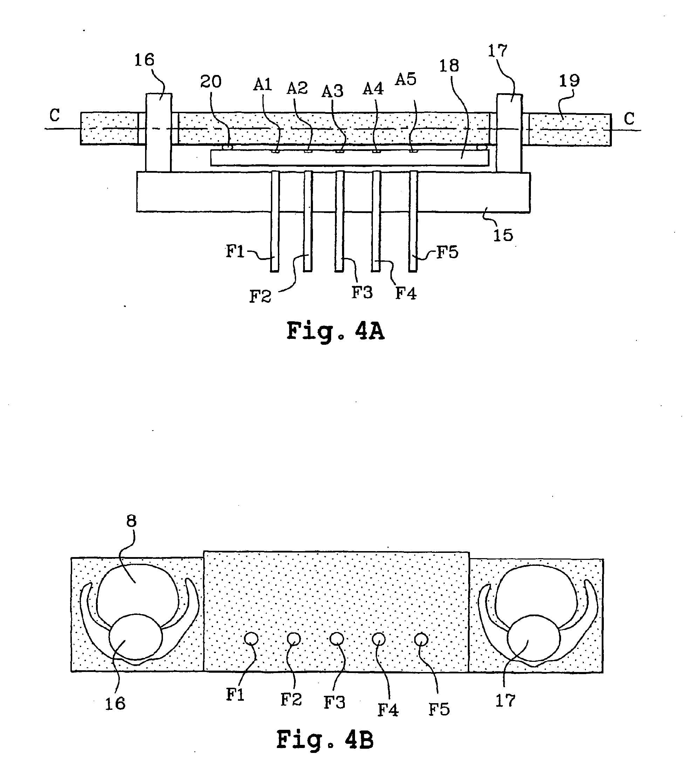

La figure 4A représente une vue de dessus d'une structure de fixation d'un connecteur muni de fibres optiques à un composant optoélectronique. La figure 4B représente une vue selon la coupe C-C de la figure 4A.

Un connecteur 15 muni de fibres optiques F1, F2, F3, F4, F5, par exemple un connecteur MT (MT pour « Mechanically Transferable »), est inséré dans une plaque de silicium 19 à l'aide de pions de guidage 16, 17. Chaque pion de guidage 16, 17 est fixé à la plaque de silicium par un dispositif de connexion selon l'invention. Un composant optoélectronique 18 muni de ports d'accès A1, A2, A3, A4, A5 est fixé sur une face de la plaque de silicium 19 par des billes de soudure 20. Le composant optoélectronique 18 est placé entre les pions de guidage 16 et 17 de façon que les fibres optiques F1, F2, F3, F4, F5 soient alignées avec les ports respectifs A1, A2, A3, A4, A5. Du fait de la précision de la connexion selon l'invention, les fibres optiques F1, F2, F3, F4, F5 sont alignées de façon quasi parfaite avec les ports d'accès respectifs A1, A2, A3, A4, A5.

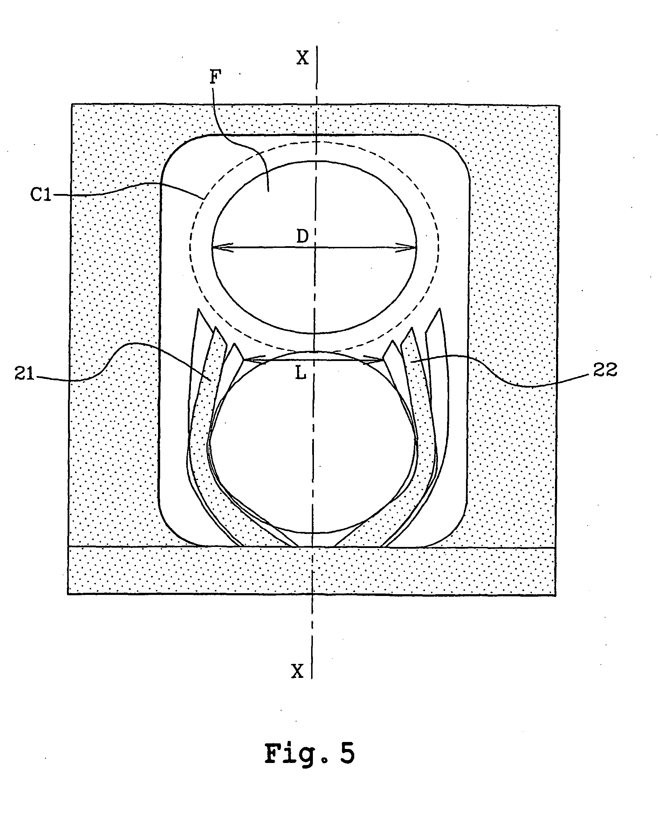

La figure 5 représente un dispositif de connexion de fibre optique avec un composant optoélectronique selon un deuxième mode de réalisation de l'invention.

Le dispositif de connexion selon le deuxième mode de réalisation de l'invention comprend deux bras mobiles 21 et 22 positionnés de façon symétrique par rapport à un axe XX'. La position de fixation de la fibre optique est alors telle que la fibre est maintenue entre les bras mobiles 21 et 22.

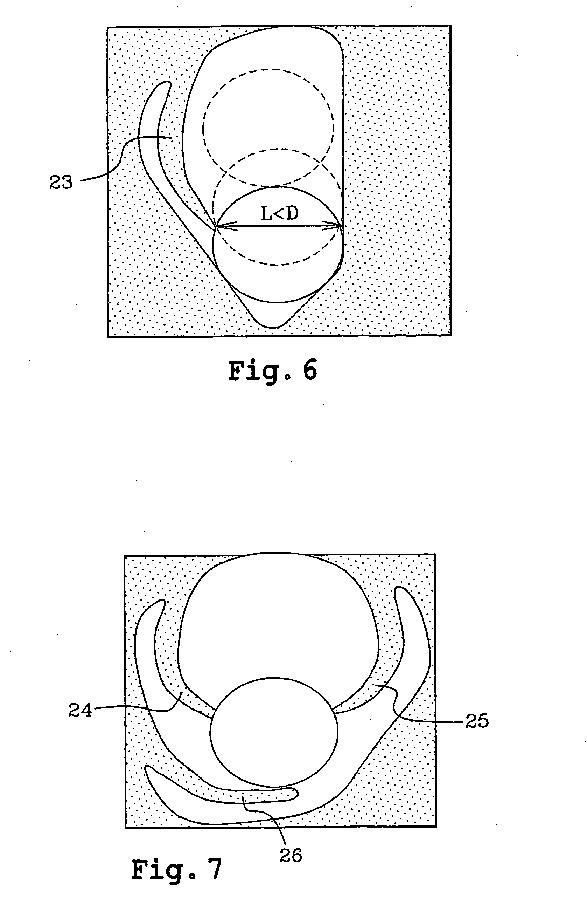

La figure 6 représente un dispositif de connexion de fibre optique avec un composant optoélectronique selon un troisième mode de réalisation de l'invention.

Le dispositif selon l'invention comprend ici un seul bras mobile 23. La zone de maintien de la fibre dans le logement (Z2) est ici délimitée par une extrémité du bras mobile 23 et par une partie de paroi du logement.

La figure 7 représente un dispositif de connexion de fibre optique avec un composant optoélectronique selon un quatrième mode de réalisation de l'invention.

La fibre F est ici maintenue par trois bras mobiles 24, 25, 26. La première zone Z1 est délimitée par une partie de paroi du logement et par deux des bras mobiles 24 et 25. La deuxième zone Z2 est délimitée par les extrémités des deux bras mobiles 24 et 25 sur lesquels la fibre est mise en pression et par le corps du troisième bras mobile 26 sur lequel la fibre vient prendre appui. Ce mode de réalisation permet avantageusement un maintien isostatique de la fibre F. Un autre avantage est de permettre que l'alignement de la fibre ne dépende pas des variations de cotes de gravure du silicium.

Tous les couplages optiques peuvent avantageusement être envisagés à l'aide des dispositifs de connexion selon l'invention : le coulage fibre/VCSEL (VCSEL pour « Vertical Cavity Surface Emitting Laser »), le couplage fibre/fibre, le couplage fibre/détecteur, le couplage fibre/guide d'onde. Tous les tests électro-optiques peuvent également être facilement effectués avant une éventuelle fixation définitive des composants. Des arrivées optiques par fibre sont alors utilisées pour simuler le montage final.

## Revendications

1. Dispositif de connexion d'au moins une fibre optique (F) avec un composant optoélectronique (12), le dispositif comprenant au moins un logement pourvu d'au moins un bras mobile possédant une extrémité libre et une extrémité fixée à la paroi du logement, le logement comprenant une première zone (Z1) délimitée par une partie de paroi du logement et par le au moins un bras mobile et une deuxième zone (Z2) délimitée par le(s) corps ou extrémité(s) libre(s) du au moins un bras mobile et par une autre partie de paroi du logement, la première zone possédant un axe longitudinal selon lequel la fibre est introduite dans ladite première zone, la deuxième zone étant disposée par rapport à la première zone de telle façon que, après qu'une pression a été exercée perpendiculairement à l'axe longitudinal par la fibre sur le bras mobile, ladite fibre est immobilisée dans une position de rétention dans la deuxième zone.

2. Dispositif de connexion selon la revendication 1, **caractérisé en ce que** le logement contient un seul bras mobile (23) et **en ce que** la deuxième zone (Z2) est délimitée par une extrémité du bras mobile (23) et par une partie de paroi du logement.

3. Dispositif de connexion selon la revendication 1, **caractérisé en ce que** le logement contient deux bras mobiles (9, 10) et **en ce que** la deuxième zone (Z2) est délimitée par les extrémités des deux bras mobiles (9, 10) et une partie de paroi du logement.

4. Dispositif de connexion selon la revendication 1, **caractérisé en ce que** le logement contient deux bras mobiles (21, 22) et **en ce que** la deuxième zone (Z2) est délimitée par le corps des deux bras mobiles dans lesquels la fibre vient s'insérer et par une partie de paroi du logement.

5. Dispositif de connexion selon la revendication 1, **caractérisé en ce que** le logement contient trois bras mobiles (24, 25, 26), **en ce que** la première zone (Z1) est délimitée par une partie de paroi du logement et par deux des bras mobiles (24, 25) et **en ce que** la deuxième zone (Z2) est délimitée par les extrémités desdits deux des bras mobiles (24, 25) et par le corps d'un troisième bras mobile (26) sur lequel la fibre optique vient prendre appui.

6. Dispositif selon l'une quelconque des revendications précédentes, **caractérisé en ce qu'**il est en silicium et **en ce que** le ou les bras mobiles sont du type ressort micromécanique en silicium.

7. Procédé de connexion d'au moins une fibre optique (F) avec un composant optoélectronique (12), le procédé comprenant les étapes suivantes :
- introduction de la fibre optique dans une première zone (Z1) d'un logement selon un axe longitudinal de ladite première zone, la première zone étant délimitée par une partie de paroi du logement et par au moins un bras mobile possédant une extrémité libre et une extrémité fixée à la paroi du logement, et
- fixation de la fibre optique dans une deuxième zone du logement délimitée par le(s) corps ou extrémité(s) libre(s) du au moins un bras mobile et par une autre partie de paroi du logement, par pression exercée perpendiculairement à l'axe longitudinal par la fibre sur le bras mobile.

8. Procédé de connexion selon la revendication 7, **caractérisé en ce qu'**il comprend une étape supplémentaire de fixation de la fibre à l'intérieur de la deuxième zone (Z2) du logement à l'aide de colle.

9. Assemblage de connexion optique comprenant un connecteur (15) muni de fibres optiques" (F1, F2, F3, F4, F5) et une structure de fixation (19) du connecteur pour la connexion entre le connecteur et un composant optoélectronique (18), le connecteur comprenant au moins un pion de guidage (16, 17), la structure comprenant au moins un logement (8) pourvu d'au moins un bras mobile possédant une extrémité libre et une extrémité fixée à la paroi du logement, le logement comprenant :
- une première zone (Z1) délimitée par une partie de paroi du logement et par le au moins un bras mobile, la première zone ayant un axe longitudinal selon lequel le pion de guidage est introduit dans la première zone,
- une deuxième zone (Z2) délimitée par le(s) corps ou extrémité(s) libre(s) du au moins un bras mobile et par une autre partie de paroi du logement, la deuxième zone étant disposée par rapport à la première zone de telle façon que après qu'une pression a été exercée perpendiculairement à l'axe longitudinal par le pion de guidage sur le bras mobile, ledit pion de guidage est immobilisé dans une position de rétention dans la deuxième zone.

10. Assemblage selon la revendication 9, **caractérisée en ce que** le logement contient un seul bras mobile (23) et **en ce que** la deuxième zone (Z2) est délimitée par l'extrémité du bras mobile et par une partie de paroi du logement.

11. Assemblage selon la revendication 9, **caractérisée en ce que** le logement contient deux bras mobiles (9, 10) et **en ce que** la deuxième zone (Z2) est délimitée par les extrémités des deux bras mobiles et une partie de paroi du logement.

12. Assemblage selon la revendication 9, **caractérisée en ce que** le logement contient deux bras mobiles (21, 22) et **en ce que** la deuxième zone (Z2) est délimitée par le corps des deux bras mobiles dans lesquels le pion de guidage vient s'insérer et par une partie de paroi du logement.

13. Assemblage selon la revendication 9, **caractérisée en ce que** le logement contient trois bras mobiles (24, 25, 26), **en ce que** la première zone (Z1) est délimitée par une partie de paroi du logement et par deux bras mobiles (24, 25) parmi les trois bras mobiles et **en ce que** la deuxième zone (Z2) est délimitée par les extrémités desdits deux bras mobiles (24, 25) et par le corps du troisième bras mobile (26) sur lequel le pion de guidage vient prendre appui.

14. Assemblage selon l'une quelconque des revendications 9 à 12, **caractérisée en ce que** la structure de fixation est en silicium et **en ce que** les bras mobiles sont du type ressort micromécanique en silicium.

15. Procédé de fixation de connecteur muni de fibres optiques avec un composant optoélectronique, le connecteur comprenant au moins un pion de guidage (16, 17), le procédé comprenant les étapes suivantes :
- introduction du pion de guidage dans une première zone (Z1) d'un logement (8) selon un axe longitudinal de ladite première zone, la première zone étant délimitée par une partie de paroi du logement et par au moins un bras mobile possédant une extrémité libre et une extrémité fixée à la paroi du logement, et
- fixation du pion de guidage dans une deuxième zone du logement délimitée par le(s) corps ou extrémité(s) libre(s) du au moins un bras mobile et par une autre partie de paroi du logement, par pression exercée perpendiculairement à l'axe longitudinal par le pion de guidage sur le bras mobile.

## Claims

1. Device for connecting at least one optical fiber (F) with an optoelectronic component (12), the device comprising at least one housing (8) provided with at least one mobile arm having a free end and an end attached to the inner surface of the housing, the housing comprising a first zone (Z1) delimited by a part of the inner surface of the housing and the at least one mobile arm and a second zone (Z2) delimited by the body or free ending(s) of the at least one mobile arm and another part of the inner surface of the housing, the first zone having a longitudinal axis according which the fiber is inserted in said first zone, the second zone being positioned in relation with the first zone so that, after a pressure is exerted by the fiber on the mobile arm perpendicularly to the longitudinal axis, said fiber is immobilized in a holding position in the second zone.

2. Connection device according to claim 1,
**characterized in that** the housing contains a single mobile arm (23) and **in that** the second zone (22) is delimited by one end of the mobile arm (23) and by a part of the inner surface of the housing.

3. Connection device according to claim 1,
**characterized in that** the housing comprises two mobile arms (9, 10) and **in that** the second zone (Z2) is delimited by the ends of the two mobile arms (9, 10) and part of the inner surface of the housing.

4. Connection device according to claim 1,
**characterized in that** the housing comprises two mobile arms (21, 22) and **in that** the second zone (Z2) is delimited by the body of the two mobile arms in which the fiber is inserted and part of the wall of the housing.

5. Connection device according to claim 1,
**characterized in that** the housing contains three mobile arms (24, 25, 26), **in that** the first zone (Z1) is delimited by a part of the inner surface of the housing and by two of the mobile arms (24, 25) and **in that** the second zone (Z2) is delimited by the ends of two of the said mobile arms (24, 25) and by the body of a third mobile arm (26) on which the optical fiber applies pressure.

6. Connection device according to any one of the previous claims, **characterized in that** it is made of silicon and **in that** the mobile arm(s) is (are) of the micro mechanical spring type made of silicon.

7. Process for connection of at least one optical fiber (F) with an optoelectronic component (12), the process comprising the following steps:
- the fiber is inserted in a first zone (Z1) of a housing (8) according to a longitudinal axis of said first zone, the first zone being delimited by a part of the inner surface of the housing and at least one mobile arm having a free end and an end attached to the inner surface of the housing, and
- the fiber is fixed, by means of a pressure exerted by the fiber on the mobile arm perpendicularly to the longitudinal axis, in a second zone of the housing delimited by the body or free end(s) of at least one mobile arm and another part of the inner surface of the housing.

8. Connection process according to claim 7,
**characterized in that** it comprises an additional step to fix the fiber inside the second zone (Z2) of the housing using glue.

9. Optical connection assembling comprising a connector (15) fitted with optical fibers (F1, F2, F3, F4, F5) and a connector fixing structure for the connection between the connector and an optoelectronic component (18), the connector comprising at least one guide pin (16, 17), the fixing structure comprising at least one housing (8) provided with at least one mobile arm having a free end and an end attached to the inner surface of the housing, the housing comprising:
- a first zone (Z1) delimited by a part of the inner surface of the housing and the mobile arm, the first zone having a longitudinal axis according to which the guide pin is inserted in the first zone,
- a second zone (Z2) delimited by the body or free end(s) of the at least one mobile arm and another part of the inner surface of the housing, the second zone being positioned in relation with the first zone so that, after a pressure is exerted on the mobile arm by the guide pin perpendicularly to the longitudinal axis, said guide pin is immobilized in a holding position in the second zone.

10. Assembling according to claim 9, **characterized in that** the housing contains a single mobile arm (23) and **in that** the second zone (Z2) is delimited by the end of the mobile arm and by a part of the inner surface of the housing.

11. Assembling according to claim 9, **characterized in that** the housing contains two mobile arms (9, 10) and **in that** the second zone (Z2) is delimited by the ends of the two mobile arms and a part of the inner surface of the housing.

12. Assembling according to claim 9, **characterized in that** the housing contains two mobile arms (21, 22) and **in that** the second zone (Z2) is delimited by the body of the two mobile arms into which the guide pin is inserted and a part of the inner surface of the housing.

13. Assembling according to claim 9, **characterized in that** the housing contains three mobile arms (24, 25, 26), **in that** the first zone (Z1) is delimited by a part of the inner surface of the housing and two mobile arms (24, 25) among the three mobile arms and **in that** the second zone (Z2) is delimited by the said ends of the two mobile arms (24, 25) and by the body of the third mobile arm (26) on which the guide pin bears.

14. Assembling according to any one of claims 9 to 12, **characterized in that** the fixing structure is made with silicon and **in that** the mobile arms are of the micro mechanical spring type made with silicon.

15. Process for attachment of a connector equipped with optical fibers to an optoelectronic component, the connector comprising at least one guide pin (16, 17), **characterized in that** it comprises the following steps:
- insertion of the guide pin in a first zone (Z1) of a housing (8) according to a longitudinal axis a of said first zone, the first zone being delimited by a part of the inner surface of the housing and at least one mobile arm having a free end and an end attached to the inner surface of the housing, and
- fixing, by means of a pressure exerted by the guide pin on the mobile arm perpendicularly to the longitudinal axis, of the guide pin in a second zone of the housing delimited by the body or free end(s) of said at least one mobile arm and another part of the inner surface of the housing.

## Patentansprüche

1. Verbindungsvorrichtung von wenigstens einer optischen Faser (F) mit einem optoelektronischen Bauelement (12), wobei die Vorrichtung wenigstens einen Sitz umfasst, versehen mit wenigstens einem beweglichen Arm mit einem freien Ende und einem an der Wand des Sitzes fixierten Ende, und dieser Sitz dabei eine erste Zone (Z1) umfasst, begrenzt durch einen Teil der Wand des Sitzes und durch diesen wenigstens einen beweglichen Arm, und eine zweite Zone Z2 umfasst, begrenzt durch den (die) Körper oder das (die) freie(n) Ende(n) wenigstens eines beweglichen Arms und durch einen anderen Teil der Wand des Sitzes, wobei die erste Zone eine Längsachse besitzt, gemäß der die Faser in die genannte erste Zone eingeführt wird, und die zweite Zone in Bezug auf die erste Zone so angeordnet ist, dass die genannte Faser - nachdem durch die Faser ein Druck senkrecht zur Längsachse auf den beweglichen Arm ausgeübt worden ist - in einer Zurückhaltungsposition in der zweiten Zone arretiert wird.

2. Verbindungsvorrichtung nach Anspruch 1, **dadurch gekennzeichnet, dass** der Sitz einen einzigen Arm (23) umfasst, und **dadurch**, dass die zweite Zone (Z2) durch ein Ende des beweglichen Arms (23) und durch einen Teil der Wand des Sitzes begrenzt wird.

3. Verbindungsvorrichtung nach Anspruch 1, **dadurch gekennzeichnet, dass** der Sitz zwei bewegliche Arme (9, 10) umfasst, und **dadurch**, dass die zweite Zone (Z2) begrenzt wird durch die Enden der beiden beweglichen Arme (9, 10) und einen Teil der Wand des Sitzes.

4. Verbindungsvorrichtung nach Anspruch 1, **dadurch gekennzeichnet, dass** der Sitz zwei bewegliche Arme (21, 22) umfasst, und **dadurch**, dass die zweite Zone (Z2) durch den Körper der beiden beweglichen Arme, in die die Faser sich einfügt, und durch einen Teil der Wand des Sitzes begrenzt wird.

5. Verbindungsvorrichtung nach Anspruch 1, **dadurch gekennzeichnet, dass** der Sitz drei bewegliche Arme (24, 25, 26) umfasst, und dass die erste Zone (Z1) durch einen Teil der Wand des Sitzes und durch zwei der beweglichen Arme (24, 25) begrenzt wird, und **dadurch**, dass die zweite Zone (Z2) durch die Enden der genannten beiden beweglichen Arme (24, 25) und durch den Körper eines dritten beweglichen Arms (26) begrenzt wird, auf dem sich die optische Faser abstützt.

6. Vorrichtung nach einem der vorangehenden Ansprüche, **dadurch gekennzeichnet, dass** sie aus Silicium ist, und **dadurch**, dass der (oder die) bewegliche(n) Arm(e) vom Typ Mikromechanik-Siliciumfeder ist (sind).

7. Verbindungsverfahren von wenigstens einer optischen Faser (F) mit einem optoelektronischen Bauelement (12), wobei das Verfahren die folgenden Schritte umfasst:
- Einführen der optischen Faser in eine erste Zone (Z1) eines Sitzes gemäß einer Längsachse der genannten ersten Zone, wobei die erste Zone begrenzt wird durch einen Teil der Wand des Sitzes und durch wenigstens einen beweglichen Arm mit einem freien Ende und einem an der Wand des Sitzes fixierten Ende, und
- Fi xieren der optischen Faser - mittels eines zur Längsachse senkrechten Drucks, ausgeübt durch die Faser auf den beweglichen Arm - in einer zweiten Zone des Sitzes, begrenzt durch den (die) Körper oder das (die) freie(n) Ende(n) wenigstens eines beweglichen Arms und durch einen anderen Teil der Wand des Sitzes.

8. Verbindungsverfahren nach Anspruch 7, **dadurch gekennzeichnet, dass** es einen zusätzlichen Schritt zur Fixierung der Faser im Innern der zweiten Zone (Z2) des Sitzes mit Hilfe von Klebstoff umfasst.

9. Optischer Verbindungszusammenbau, umfassend einen Verbinder (15), versehen mit optischen Fasern (F1, F2, F3, F4, F5), und eine Fixierungsstruktur (19) des Verbinders für die Verbindung zwischen dem Verbinder und einem optoelektronischen Bauelement (18), wobei der Verbinder wenigstens einen Führungsstift (16, 17) und die Struktur wenigstens einen Sitz (8) umfasst, ausgestattet mit wenigstens einem beweglichen Arm mit einem freien Ende und einem an der Wand des Sitzes fixierten Ende, und der Sitz umfasst:
- eine erste Zone (Z1), begrenzt durch einen Teil der Wand des Sitzes und durch den - wenigstens einen - beweglichen Arm, wobei die erste Zone eine Längsachse hat, gemäß der der Führungsstift in die erste Zone eingeführt wird,
- eine zweite Zone (Z2), begrenzt durch den (oder die) Körper oder das (oder die) freie(n) Ende(n) eines beweglichen Arms und durch einen anderen Teil der Wand des Sitzes,
wobei die zweite Zone in Bezug auf die erste Zone so angeordnet ist, dass - nachdem durch den Führungsstift auf den beweglichen Arm senkrecht zur Längsachse ein Druck ausgeübt worden ist - der genannte Führungsstift in einer Zurückhaltungsposition in der zweiten Zone arretiert wird.

10. Fixierungsstruktur nach Anspruch 9, **dadurch gekennzeichnet, dass** der Sitz einen einzigen beweglichen Arm (23) umfasst, und dass die zweite Zone (Z2) durch das Ende des beweglichen Arms und durch einen Teil der Wand des Sitzes begrenzt wird.

11. Fixierungsstruktur nach Anspruch 9, **dadurch gekennzeichnet, dass** der Sitz zwei bewegliche Arme (9, 10) umfasst, und dass die zweite Zone (Z2) durch die Enden der beiden beweglichen Arme und einen Teil der Wand des Sitzes begrenzt wird.

12. Fixierungsstruktur nach Anspruch 9, **dadurch gekennzeichnet, dass** der Sitz zwei bewegliche Arme (21, 22) umfasst, und **dadurch**, dass die zweite Zone (Z2) begrenzt wird durch den Körper der beiden beweglichen Arme, in die der Führungsstift eingeführt worden ist, und durch einen Teil der Wand des Sitzes.

13. Fixierungsstruktur nach Anspruch 9, **dadurch gekennzeichnet, dass** der Sitz drei bewegliche Arme (24, 25, 26) umfasst, und **dadurch**, dass die erste Zone (Z1) durch einen Teil der Wand des Sitzes und durch zwei (24, 25) der drei beweglichen Arme begrenzt wird, und **dadurch**, dass die zweite Zone (Z2) durch die Enden der genannten beiden beweglichen Arme (24, 25) und durch den Körper des dritten beweglichen Arms (26) begrenzt wird, auf dem sich der Führungsstift abstützt.

14. Struktur nach einem der Ansprüche 9 bis 12, **dadurch gekennzeichnet, dass** sie aus Silicium ist, und **dadurch**, dass die beweglichen Arme vom Typ Mikromechanik-Siliciumfeder sind.

15. Verfahren zur Fixierung eines mit optischen Fasern versehenen Verbinders mit einem optoelektronischen Bauelement, wobei der Verbinder wenigstens einen Führungsstift (16, 17) hat und das Verfahren die folgenden Schritte umfasst:
- Einführen der optischen Faser in eine erste Zone (Z1) eines Sitzes (8) gemäß einer Längsachse der genannten ersten Zone, wobei die erste Zone begrenzt wird durch einen Teil der Wand des Sitzes und durch wenigstens einen beweglichen Arm mit einem freien Ende und einem an der Wand des Sitzes fixierten Ende, und
- Fixieren der optischen Faser mittels eines senkrecht zur Längsachse durch den Führungsstift auf den beweglichen Arm ausgeübten Drucks in einer zweiten Zone des Sitzes, begrenzt durch den (die) Körper oder das (die) freie(n) Ende(n) wenigstens eines beweglichen Arms und durch einen anderen Teil der Wand des Sitzes.
